(19) **Europäisches Patentamt**

**European Patent Office**

**Office européen des brevets**

(11) **EP 1 648 151 A1**

(12) **EUROPÄISCHE PATENTANMELDUNG**

(43) Veröffentlichungstag:
**19.04.2006 Patentblatt 2006/16**

(51) Int Cl.:
*H04M 3/53* (2006.01)    *H04M 3/42* (2006.01)

(21) Anmeldenummer: **05012594.7**

(22) Anmeldetag: **11.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **14.10.2004 DE 102004050785**

(71) Anmelder: **Deutsche Telekom AG**
**53113 Bonn (DE)**

(72) Erfinder:
• **Runge, Fred, Dipl.-Ing.**
**15838 Wünsdorf (DE)**

• **Müller, Christel, Dipl.-Ing.**
**15732 Schulzendorf (DE)**
• **Schneider, Heiko Armin, Dipl. Inf.**
**15732 Schulzendorf (DE)**
• **Niedermüller, Frank**
**55118 Mainz (DE)**
• **Liu, Jin, Dr.**
**12357 Berlin (DE)**
• **Trinkel, Marian, Dipl.-Ing.**
**52372 Kreuzau (DE)**

(54) **Verfahren und Anordnung zur Bearbeitung von Nachrichten im Rahmen eines Integrated Messaging Systems**

(57)    Aufgabe der Erfindung ist es, den Empfängern von Nachrichten in einem Integrated Messaging System einen möglichst authentisches Eindruck von der empfangenen Nachricht zu ermöglichen. In einem ersten Schritt wird eine im Rahmen eines Integrated Messaging Systems empfangenen Nachricht Spracherkennungs- und Diktiersystem automatisch in eine gewünschte Zielsprache übersetzt und bereitgestellt Die Nachrichteninhalte der eingehenden Nachricht sowie deren Segmente und Parameter werden gleichzeitig dazu genutzt, weitere Informationen über den Absender und über Informationen, zu generieren, die geeignet sind, dem Empfänger einen Eindruck von der eingegangenen Nachricht in möglichst authentischer Form zu übermitteln.

Figur 1

EP 1 648 151 A1

**Beschreibung**

Die Erfindung betrifft ein Integrated Messaging System und bezieht sich insbesondere auf ein Verfahren und eine Anordnung, mit dem/der einem Empfänger Nachrichten die im Rahmen eines Integrated Messaging System, beispielsweise über eine Mail-Box, übermittelt werden, mit einem Informationsgehalt anzubieten, welcher aus der unbearbeiteten Nachricht direkt nicht ersichtlich ist. Dem Empfänger sollen Nachrichten in möglichst authentischer Form mit einem hohen Erlebniswert angeboten werden, bei dem möglichst viele Sinne des Empfängers angesprochen werden sollen. Die Lösung soll insbesondere die Performance für einen Personenkreis erhöhen, der überwiegend international tätig ist Das betrifft insbesondere Personen, die im internationalen Management oder in Bereichen der internationalen Forschung, Entwicklung und Kultur tätig sind.

Messaging Systeme (Mobilbox, Voicemail Systeme) sind im Markt hinlänglich bekannt (siehe z.B. http://www.t-mobile.de/mobilbox). In Abhängigkeit von der Systemstruktur werden hier oft Sprachnachrichten als Anhänge von Textnachrichten (Emailanhänge gemeinsam mit Absenderinformationen (z.B. Absenderkennung (z.B. CLI u.ä. ), Ankunftszeit usw. abgespeichert.

Auch existieren im Telefoniebereich verschiedene Spracherkennungssysteme (siehe http://www.nuance.com; http://www.scansoft.com, ...) und für Desktops Diktiererkenner (siehe Dragon Naturally Speaking auf http://www.scansoft.com und IBM ViaVoice auf http://www.ibm.com/software/voice/viavoice), welche gesprochene Sprache in Textinformationen umsetzen können. Diesen Systeme stehen deterministische (siehe Nuance Grammar Specification Language) oder auf internen Statistiken beruhenden Grammatiken (siehe Scansoft) zur Verfügung. Letztere werden zumeist applikations- oder domänenbezogen an Hand einer großen Menge von textuellen Informationen, beispielsweise aus Zeitungsartikeln, Büchern oder Sprachdatensammlungen, erstellt, um daraus erkennerinterne Wahrscheinlichkeitsmodelle für Wortübergänge von in diesen Texten vorkommenden Wortfolgen zu berechnen.

Neuere Spracherkennungssysteme bieten zur Unterstützung der multilingualen Spracherkennung ebenfalls interne Funktionen zur dynamischen Fremdsprachdetektion (Dynamic Language Detection, siehe http://www.nuance.com/assets/pdf/nuance85_datasheet_020304.pdf). Eine auf der Grundlage von Algorithmen der Sprachsignalverarbeitung beruhende Fremdsprachdetektion kann dabei z.B. durch Auswertung der Häufigkeit vorkommender Phoneme einer sprachlichen Äußerung durchgeführt werden, die durch einen phonembasierten Spracherkenner geliefert werden.

Aus WO03/024073 ist eine Methode zur Präsentation von Informationen von telefonischen Nachrichten an einen Nutzer bekannt, in welcher innerhalb von Sprachnachrichten nach vordefinierten Informationen gesucht wird. Das Verfahren umfasst die Schritte Empfang ankommender telefonischer Nachrichten und Erkennung von Sprache in den eingehenden telefonischen Nachrichten durch Absuchen der eingehenden telefonischen Nachrichten auf mindestens eine vorab festgelegte Kategorie von Informationen. Wenn eine vorab festgelegte Kategorie von Informationen in der erkannten Sprache festgestellt wird, erfolgt eine Darstellung der Informationen für den Benutzer. Einsprachige Systeme sind jedoch beispielsweise bei Nachrichten in unterschiedlichen Sprachen nicht immer anwendbar. Bei diesem und ähnlichen Verfahren wird nicht berücksichtigt, dass die empfangenen Sprachnachrichten in einer anderen Sprache als für den Empfänger erforderlich aufgesprochen sein können.

Ebenfalls bekannt sind Systeme zur Übersetzung von Schriftsprache und gesprochener Sprache (siehe z.B. Fu-Hua Liu et al. "Noise robustness in speech to speech treanslation", IBM Tech Report RC22874, 2003), in dem ein Verfahren zur Reduzierung von Störgeräuschen auf Spracherkennerebene beschrieben wird.

Für die bekannten Übersetzungssysteme (siehe z.B.http://penance.is.cs.cmu.edu/11-733/Slides/JoyZhang.pdf und http://www.linguatec.de/products/pt2004/index.shtml ) wird jedoch immer die Bekanntheit von Quell- und Zielsprache zur Auswahl des entsprechenden Übersetzungsmoduls vorausgesetzt.

Allen Lösungen ist gemein, dass insbesondere auf Quellsprachenseite keine automatische Fremdsprachdetektion (Language Detection) erfolgt, bei der die Sprache der eingehenden Nachricht detektiert wird.

Weiterhin ist es bekannt, Nachrichten sowohl gemäß erfasster Zusatzdaten als auch gemäß ihrem Inhalt klassifiziert und je nach Intention des Mailboxinhabers oder des Systembetreibers zu kategorisieren. In EP 1298872 wird ein Verfahren zur Verarbeitung von Nachrichten in einem Unified Messaging System beschrieben, bei dem verschiedene Nachrichtenkategorien so definiert werden, dass jede Nachricht in einem Unified Messaging System einer Regel, die zu mindestens einer Kategorie gehört, zugeordnet werden kann. Die Nachrichtenkategorie kann beispielsweise Kategorien beinhalten, die bestimmten Typen oder Formaten zugeordnet sind, sowie Kategorien, die frei definiert werden können. Außerdem können für die Nachrichtenkategorien bestimmte Regeln definiert werden, die der Zuordnung der Nachricht dienen. Auch bei dieser Lösung findet eine mögliche Multilingualität ankommender Nachrichten keine Beachtung.

In US002/0069048 werden allgemeine Ideen zur Übersetzung von Nachrichten mit Ausgabe in einem Audioformat genannt ohne dass jedoch eine Detection der Quellsprache näher beschrieben wurde. Bei derartigen Lösungen hat der Empfänger der Nachricht den Nachteil, dass er während des Dialoges mit dem System umständlich erläutern muss, in welchen Zielsprachen er die Audioausgabe jeder einzelnen Nachricht wünscht.

Weiterhin sind auch Lösungen bekannt, die auf mit Erfassung verschiedener Sensordaten und deren Übermittlung über ein Telekommunikationsnetz beruhen So wird in DE 101 49 049 A1 ein Verfahren und ein System zur Schaffung und Modifikation einer virtuellen biologischen Repräsentanz der Nutzer von Computeranwendungen auf der Grundlage von biologischen Parametern des Nutzers der Computeranwendungen beschrieben.

Aufgabe der Erfindung ist es, den Empfängern von Nachrichten in einem Integrated Messaging System einen möglichst authentisches Eindruck von der Nachricht zu vermitteln. Das bezieht sich sowohl auf die Nachricht selber, die dem Nutzer in einer für ihn verständlichen Form dargeboten werden soll, als auch auf zusätzliche Informationen zur Nachricht und zum Absender der Nachricht, welche der Nachricht selber nicht explizit entnommen werden können. Dabei soll insbesondere auch dass Problem gelöst werden, dass es sich bei der eingehenden Nachricht um eine Nachricht handelt, die in einer dem Empfänger nicht bekannten Sprache abgefasst ist. Ziel der Erfindung ist es, das Verständnis des Empfängers für den Inhalt der Nachricht dadurch zu verbessern, dass die Nachricht als ein möglichst authentisches Ereignis mit erhöhtem Informationsinhalt angeboten wird. Gleichzeitig ist die Lösung auf eine Verbesserung der Strukturierung von Nachrichtengruppen und auf eine Verbesserung der Navigation in den Nachrichten selber ausgerichtet. In den nachgeordneten Ausführungen wird mit Nachricht oder Nachrichtendokument ein Dokument und/oder ein Teil eines Dokumentes, bezeichnet, welches über ein Messaging System empfangen wurde und unterschiedliche Inhaltsformate, wie z.B. Text, Video,/Bild, Audio/Sprache, biometrische Informationen, Geruchsinformationen, Gestikinformationen, Temperaturinformationen usw. beinhalten kann. Sowohl Attribute des Nachrichtendokumentes wie z.B. Empfangszeit, Absenderadresse, Absenderkennung, Absendername, Absendezeit usw. als auch Anhänge und Verweise werden als Teil oder Segment des Nachrichtendokumentes verstanden.

Unter dem Begriff Nachrichtensegment wird einTeil oder eine Informationseinheit eines Nachrichtendokumentes wie z.B. ein Satz, eine Satzfolge, ein Wort, eine Wortfolge, eine Bitfolge, ein Absatz, eine Absatzfolge oder ein Anhang verstanden. Nachrichtensegmente können das gleiche und/oder unterschiedliche Formate, wie beispielsweise ein Audioformat, ein Textformat, ein Videoformat, ein Bildformat oder auch andere mögliche Formate aufweisen. Möglich ist auch ein Link.

Eine Kennung im erfindungsgemäßen Sinn besteht aus einer und/oder mehreren Klassen.

Die einzelnen Klassen sind technische Merkmale für

1. die Kundenkennung, z. B.

- Kundennummer,
- PAN,
- Personalausweisnummer,

2. die Kommunikationskennung, z.B.

- CLI (Calling Line Identification),
- HLR (Home Location Register,
- IP-Adresse (Internet protocol),
- Rufnummer, Telefonrufnummer
- Telekartennummer,

3. die Gerätekennung, z.B.

- IMEI(International Mobil Equipment Identy)
- Telekartennummer
- SIM Karte (Subscriber Identy Modul) Smart Card,

4. die Transaktionskennung für die Transaktion der Kommunikation,
5. die biometrische Kennung, z.B.

- Fingerprint,
- Voiceprint,
- Iris.

Das Wirkprinzip der Erfindung besteht darin, dass über ein Integrated Messaging System eingehende Nachrichten in einem ersten Schritt in eine vom Empfänger gewünschte bzw. voreingestellte Sprache übersetzt wird. Dazu werden z.B. eingehende Sprachnachrichten nach der Umsetzung in eine Quell-Textinformation durch ein Spracherkennungs- und Diktiersystem automatisch in eine gewünschte Zielsprache übersetzt und anschließend dem Nutzer bereitgestellt.

Die Nachrichteninhalte der eingehenden Nachricht sowie deren Segmente und Parameter werden gleichzeitig dazu genutzt, weitere Informationen über den Absender und über andere nachrichtenbezogene Sachverhalte zu generieren, die geeignet sind, dem Empfänger einen Eindruck von dem Zustandekommen der Nachricht in möglichst authentischer Form zu übermitteln. Dabei sollen auch solche Informationen über den Absender generiert werden, welche ggf. in systeminternen Datensätzen nicht vorhanden sind.

Die vorliegende Erfindung löst diese Problem durch das Abspeichern und/oder sammeln entsprechender Informationen wie beispielsweise der bevorzugten Zielsprache des Mailboxinhabers in einem Inhaberdatenbereich 170. Beim Inhaberdatenbereich handelt es sich um einen Speicherbereich für erfasste und/oder ermittelte Inhaberdaten, wie beispielsweise ID-Code, Nutzerkennung, Muttersprache, gewünschte Zielsprache, bevorzugte TTS-Stimme, bevorzugte Wiedergabegeschwindigkeit, Zielrufnummern und Suchschlüsselworte für wichtige Nachrichten. Die Einstellung kann beispielsweise über eine Web-Schnittstelle und Browser per Spracheingabe multimodal bzw. unimodal oder per Email über die Mailbox 30 des Mailboxinhabers vorgenommen werden. In der vorliegenden Erfindung ist (nach der Erkennung der Kennung) ein zusätzliches Sprachenbewertungsmodul 100 vorgesehen, welches einen Algorithmus zur Auswahl der wahrscheinlichsten Sprache enthält. Das Sprachenbewertungsmodul 100 dient zur endgültigen Detektion der Quellsprache einer eingehenden Nachricht unter Ausnutzung aller vorliegenden Informationen . Das zusätzliche Sprachenbewertungsmodul 100 ist notwendig, da die Anwendung automatischer Verfahren, die auf der Spracherkennung durch Anwendung von Methoden der Sprachsignalverarbeitung oder auf der Spracherkennung anhand eines Textes beruhen, zu falschen Ergebnissen führen können. Falsche Ergebnisse im o.g. Sinne können beispielsweise beim Sprechen einer deutschen Nachricht durch einen in der deutschen Phonetik ungeübten Sprecher oder bei gemischtsprachigen Texten auftreten. Auch kann für häufig in der Mailbox anzutreffende Absender über einen Absenderdatenbereich für erfasste und/oder ermittelte Absenderdaten 60 ein Profil für die bevorzugte Absendersprache erstellt werden, welches sowohl administrativ als auch nach Auswertung bereits vorliegender Nachrichten des jeweiligen Absenders im Absenderdatenbereich für erfasste und/oder ermittelte Absenderdaten 60 eingestellt werden kann. Allein dieses Merkmal wäre ggf. nicht ausreichend, da in unterschiedlichen Situationen, verschiedene Sprachen zur Anwendung kommen können. Das ist beispielsweise dann der Fall, wenn Nachrichten von einem Absender an einen Empfänger in deutscher Sprache und an weitere Empfänger in englischer Sprache gerichtet sind. Gleiches würde auch für die alleinige Auswertung einer Kennung, wie beispielsweise einer CLI mit Auslandsvorwahl, gelten. Aus diesen Gründen werden im Absenderdatenbereich für erfasste und/oder ermittelte Absenderdaten 60 neben den durch den Mailboxinhaber explizit eingetragenen Parametern auch Parameter gespeichert, welche das System aus den eingehenden Nachrichten des Absenders ermittelt. Dabei kann es sich um die mit höchster Wahrscheinlichkeit gesprochene Sprache, das ermittelte Geschlecht des Absenders der Nachricht, die ermittelte emotionale Veranlagung des Absenders der Nachricht und/oder die Altersgruppe des Absenders der Nachricht handeln. Für den Mailboxinhaber besteht jedoch auch explizit die Möglichkeit, im Absenderdatenbereich für erfasste und/oder ermittelte Absenderdaten 60 gespeicherte Daten beispielsweise per Web-Schnittstelle und Browser oder per Telefon multimodal oder unimodal, z. B. per Spracherkennung, zu überschreiben. Eine weitere zweckmäßige Ausgestaltung des Speicherbereiches für erfasste und/oder ermittelte Absenderdaten 60 besteht darin, die Historie ermittelter Absenderdaten zur späteren Auswertung festzuhalten bzw. abzuspeichern. Löscht z.B. ein Mailboxinhaber immer die Nachrichten eines Absenders ohne diese anzuhören oder zu lesen, so kann ab einer im System vordefinierten Anzahl systemintern eine Parameterverknüpfung generiert werden, welche Nachrichten dieses Absenders als "Spam" klassifiziert und entweder sofort löscht oder in einen äußerst niedrig priorisierten Speicherbereich verschiebt. Das führt dazu, dass derartige Nachrichten immer als letzte vorgespielt werden.

Zum Stand der Technik gehört die Verknüpfung der Nachrichten durch eine einzelne Empfängermailbox selbst oder durch deren Absender-CLI, sowie andere Ordnungskriterien, wie z.B. die Empfangszeit. Durch die in der Erfindung angewendeten Methoden ist nun auch eine bei Bedarf die einzelne Mailbox übergreifende Verknüpfung von Nachrichten nach ihrem Inhalt möglich. Eine wesentlich vereinfachte Klassenbildung von Nachrichten ergibt sich durch die Erweiterung von Absenderadressen/Absenderinformationen (CLI, HLR, E-Mail-Adresse, Zeitangaben) mit kurzen, abstrahierenden Inhaltsbeschreibungen, wie beispielsweise Klassennamen.

Systeme mit Erfassung verschiedener Sensordaten und deren Übermittlung über ein Telekommunikationsnetz an sich sind hinlänglich bekannt. Durch die Erweiterung von Nachrichten innerhalb des Messaging Systems mit diesen Daten sind sowohl feinere Suchkriterien innerhalb einzelner Nachrichtenklassen als auch die Zusammenstellung neuartiger Nachrichtenklassen möglich.

Nachfolgend wird die Erfindung anhand eines Ausführungsbeispiels näher erläutert.

Fig. 1    Zeigt ein Blockschaltbild, welches das Wirkprinzip der Erfindung enthält.

Fig. 2    zeigt eine Architektur für eine mögliche Ausführungsform des Klassifizierungsblockes 500.

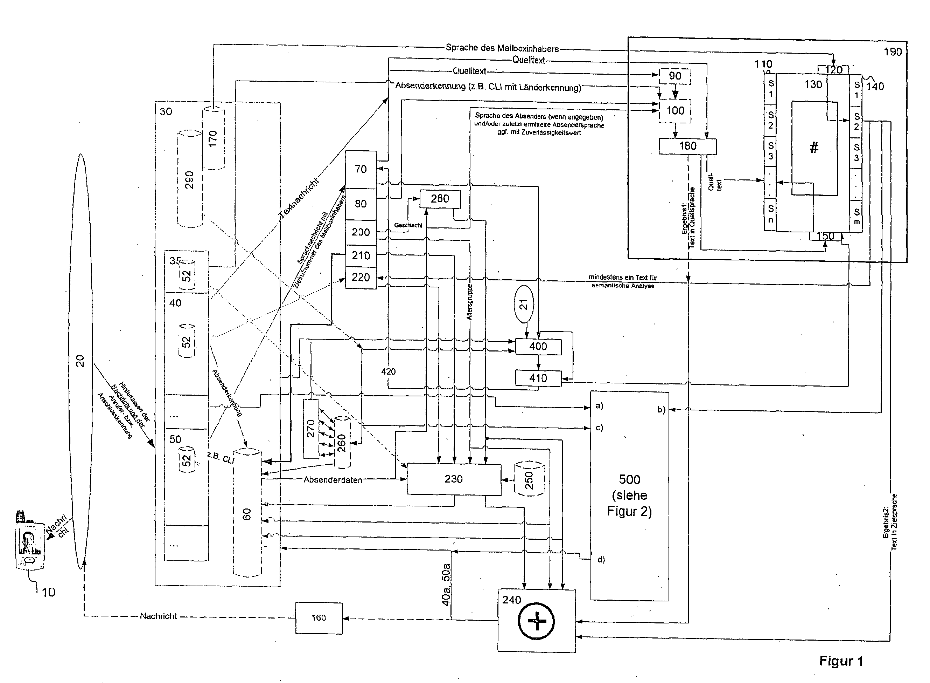

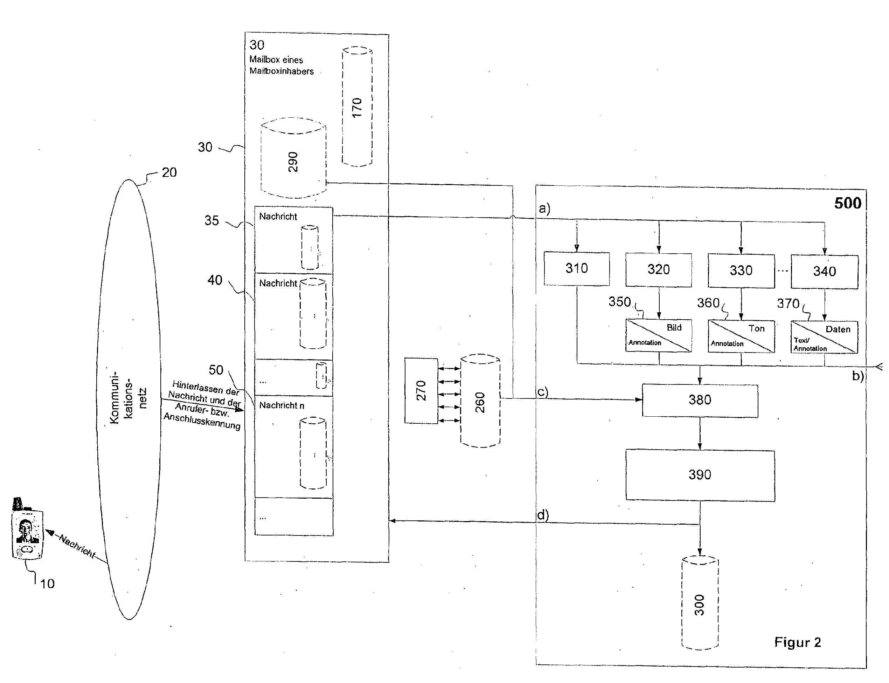

Das Ausführungsbeispiel das anhand von Fig1 und Fig.2 beschrieben wird, setzt ein Integrated Messaging System, das als Mailbox-System ausgebildet ist, voraus. Möglich ist jedoch auch die Verwendung der Lösung in einer Online- Anwendung. Die Lösung wird nachfolgend im Zusammenhang mit der Mail-Box 30 eines Mailboxinhaber beschrieben.

Der Mail-Box 30 sind neben den für den Mailboxinhaber bestimmten Nachrichten, die aus dem Speicherbereich für eingehenden Text-Nachrichten und ergänzende Nachrichten 40 und dem Speicherbereich für eingehende Sprachnachrichten und ergänzende Nachrichten 50 resultieren, sowohl Daten des Inhabers, die im Inhaberdatenbereich für erfasste und/oder ermittelte Inhaberdaten 170 gespeichert sind, als auch Daten des Absenders der Nachricht wie beispielsweise die Inhaber-CLI, bekannt. Unter ergänzenden Nachrichten werden Zusatzinformationen, wie beispielsweise zusätzlich Text-, Bild-, und Videoinformationen sowie Informationen anderer Medientypen (auch medienübergreifender Medientypen) verstanden. Das trifft ebenfalls auf bereits in der Vergangenheit gesammelte Daten zum Absender der Nachricht zu, die über das Kommunikationsnetz 20 übertragen wurden Weiterhin ist der Mail-Box 30 mindestens ein ASR-Modul 70 mit Algorithmen der Sprachenerkennung und ein Modul zur Sprachenerkennung 80 zur Fremdsprachdetektion (language detection) und mindestens ein Sprachenbewertungsmodul 100 mit einem Algorithmus zur Auswahl der wahrscheinlichsten Quellsprache einer von einem Absender 10 empfangenen Nachricht zugeordnet, welcher die Ergebnisse der auf Zwischenergebnissen der Sprachenerkennung durch das Modul zur Sprachenerkennung 80 und ggf. mindestens eines Moduls zur Sprachenerkennung/Sprachendetektion anhand eines Textes 90, ggf. mit der Landesvorwahl aus der Absenderkennung und der ggf. im Absenderdatenbereich für erfasste und/oder ermittelte Absenderdaten 60 eingetragenen Vorzugssprache wichtet und unter Anwendung geeigneter, ggf. statistisch basierter Algorithmen als Ergebnis die am höchsten wahrscheinliche Quellsprache liefert.

Das Ergebnis dient sowohl dem weiteren Abgleich der Vorzugssprache des Absenders in dem seiner übermittelten Kennung zugeordnetem Datensatz, der im Absenderdatendatenbereich für erfasste und/oder ermittelte Absenderdaten 60 gespeichert ist, als auch der automatischen Auswahl der Quellsprache durch das Übersetzungssystem 190. Im Absenderdatenbereich für erfasste und/oder ermittelte Absenderdaten 60 können beispielsweise die emotionale Veranlagung, die Vorzugssprache das wahrscheinliche Geschlecht, das Alter oder die Altersgruppe des Absenders erfasst werden. Die Zielsprache der automatischen Übersetzung wird an Hand der Daten des jeweiligen Mailboxinhabers, die im Inhaberdatenbereich für erfasste und/oder ermittelte Inhaberdaten 170 gespeichert sind, ausgewählt.

Das Übersetzungssystem 190 kann aus einer großen Anzahl von Produkten/Übersetzungssystemen verschiedener Hersteller zusammengestellt sein. Durch die durchgeführte Bestimmung von Quell- und Zielsprache erfolgt eine automatische Auswahl der Sprachkombination und damit der erforderlichen Übersetzungsmodule. Ist eine direkt erforderliche Kombination nicht vorhanden, so wird automatisch nach einer möglichen Interlingua-Kombination gesucht. Nachfolgend wird das Übersetzungssystem 190 näher erläutert:

Zur Ermittlung der Quellsprache, die über das Sprachenbewertungsmodul 100 erfolgt, wird ein zusätzlicher Algorithmus zur Auswahl der wahrscheinlichsten Sprache erforderlich, bei dem beispielsweise die Eingangsinformationen grundsätzlich oder je nach Nachrichtentyp unterschiedlich gewichtet sein können und/oder statistische Verfahren zur Anwendung kommen. Durch den Algorithmus wird dabei immer die Sprache ermittelt, für die eine vorgegebene Funktion zum gegebenen Zeitpunkt für die gegebene Nachricht oder für das Segment einer Nachricht einen Maximalwert liefert.

Die Sprache einer Nachricht und/oder der Segmente einer Nachricht könnte beispielsweise folgendermaßen ermittelt werden:

$$L = \mathrm{argmax}\ (W_{CLI}(Lx)\ +\ W_{LD} * C_{LD}(L_x)\ +\ W_T * C_T(L_x)\ +\ W_H * N_H(L_x) + \ldots + W_n * C_n(L_x)),$$

Dabei ist:

L          - ermittelte Sprache einer Nachricht und/oder eines Segmentes einer Nachricht

$W_{CLI}$ -    Wichtungsfaktor für die Länderkennung einer Nachricht (z.B. +49 für Deutschland) in Kombination mit einer bestimmten Sprache Lx

$W_{LD}$ -    Wichtungsfaktor für die Sprachenerkennung (Language Detection) durch Anwendung von Methoden der Sprachsignalverarbeitung (80)

$W_T$ -    Wichtungsfaktor für die Sprachenerkennung anhand eines Textes (90)

$W_H$ -    Wichtungsfaktor für die aus vergangenen Nachrichten eines Absenders ermittelten Sprachen

$W_n$ -    Wichtungsfaktor für weitere Eingangsparameter von (100) u. a. z.B. Bild und Video

$L_x$      - konkretes Argument (konkrete Sprache aus einer Liste n möglicher Sprachen) für die ein Funktionswert von n Funktionswerten berechnet wird

$C_{LD}$ -    durch 80 ermittelter Confidenzwert (z.B. Wahrscheinlichkeit) der durch 80 ermittelten Sprache

$C_T$      - durch 90 ermittelter Confidenzwert (z.B. Wahrscheinlichkeit) der durch 90 ermittelten Sprache

$$N_H \quad - \quad \frac{\text{Anzahl der in der Vergangenheit für einen Absender ermittelten Werte für Lx}}{\text{Gesamtzahl der in der Vergangenheit für einen Absender ermittelten Sprachwerte}}$$

$C_n$   -Confidenzwert (z.B. Wahrscheinlichkeit) der durch weitere Verfahren ermittelten Quellsprache Lx

Die Wichtungskoeffizienten können entweder durch den Systemadministrator und/oder den Mailboxinhaber individuelle Voreinstellwerte erhalten. Die Voreinstellwerte können jedoch auch automatisiert, beispielsweise im Rahmen eines neuronalen Netzes, ermittelt werden. Die Confidenzwerte werden für die gegebene Nachricht zu den vom System unterstützten Sprachen in einem ASR-Modul 70, das vorzugsweise als Server- oder Servergruppe mit Algorithmen zur Sprachenerkennung ausgebildet ist, und/oder durch ein Modul zur Sprachenerkennung 90 ermittelt. Im Modul zur Sprachenerkennung 90 wird die Sprachendetektion anhand eines Textes vorgenommen. Wird für eine unterstützte Sprache kein Konfidenzwert ermittelt, so wird er beispielsweise als Wert 0 (null) angenommen. Wird als Ergebnis eines Moduls nur die Sprache ermittelt, ohne dass die Lieferung eines Confidenzwertes vorgesehen ist, so kann als Confidenz ein anderer fester Wert, z.B. 1 (eins), angenommen werden. Die aufgeführte Funktion wird für jede im System unterstützte Quellsprache durchgeführt. Es gilt die Sprache als Quellsprache, für die entsprechend des oben angeführten Algorithmus der Maximalwert erreicht wird. Wird ein gleich hoher Maximalwert oder werden nahe beieinander liegende Maximalwerte für mehrere Sprachen erreicht, so kann die Nachricht nicht übersetzt werden. In diesem Fall kann ggf. der Empfänger (Mailboxinhaber) beim Lesen/Vorspielen der Nachricht zwischen den dann in ihrer Anzahl eingeschränkten Sprachen wählen oder ein Systemadministrator und/oder der Mailboxinhaber erhalten beispielsweise eine Mitteilung mit der Aufforderung zur Korrektur der Wichtungskoeffizienten des Algorithmus.

Das Ergebnis der Spracherkennung der Quellsprache dient sowohl dem weiteren Abgleich der Vorzugssprache des Absenders mit den Daten aus dem Absenderdatenbereich für erfasste und/oder ermittelte Absenderdaten 60 als auch der automatischen Auswahl der Quellsprache für das Übersetzungssystem 190. Über das Ausgangsmodul für Zielsprachen 140, das als Softwareschnittstelle mit den Zielsprachen $S_1$-Sm ausgebildet ist, wird in Verbindung mit dem Inhaberdatenbereich für erfasste und/oder ermittelte Inhaberdaten 170 die Vorzugssprache des Mailboxinhabers und damit die Zielsprache, in welche die Nachricht übersetzt werden soll, ermittelt.

Das Übersetzungsmodul mit Entscheidungsmatrix 130 ist sowohl mit mindestens einem Eingangsmodul für Quellsprachen 110 mit den Quellsprachen S1 bis Sn als auch mit mindestens einem Ausgangsmodul für Zielsprachen mit den Zielsprachen S1 bis Sm verbunden. Die Entscheidungsmatrix des Übersetzungsmoduls 130 kann auch n-dimensional ausgebildet sein. Das Übersetzungsmodul mit Entscheidungsmatrix 130, das unterschiedliche Übersetzungsmodule von einer ersten Sprache in eine zweite Sprache enthält, wird vom Eingangsmodul für Quellsprachen 110 und vom Modul zur Auswahl der Zielsprachen 120, das im Übersetzungssystem 190 als Softwareschnittstelle ausgebildet ist, angesteuert. Die Ansteuerung der einzelnen Übersetzungsmodule des Übersetzungsmoduls mit Entscheidungsmatrix 130 erfolgt über die Entscheidungsmatrix des Übersetzungsmoduls 130, in welche sowohl das Ergebnis der Detektion der Quellsprache als auch die ermittelte Zielsprache automatisch eingegeben werden.

Das Übersetzungsmodul mit Entscheidungsmatrix 130 kann aus den Produkten bzw. Übersetzungssystemen verschiedener Hersteller zusammengestellt sein. Durch die nach obigen Prinzipien durchgeführte Bestimmung von Quell- und Zielsprache erfolgt eine automatische Auswahl der Sprachkombination(en) und damit auch des für die Übersetzung erforderlichen Übersetzungsmoduls. Wenn beispielsweise ein erforderliches Übersetzungsmodul, zur Übersetzung von einer Sprache S 1 in eine Sprache S3, nicht vorhanden ist, jedoch Übersetzungsmodule von der Sprache S 1 in eine Sprache S4 und von der Sprache S4 in die Sprache S3 vorhanden sind, so kann durch die Anwendung der Sprache S4 als Interlingua der Übersetzungsauftrag durch die Kombination der genannten Übersetzungsmodule erfüllt werden. Eine dadurch entstehende geringere Übersetzungsqualität kann dabei in Kauf genommen werden.

Zusätzlich zu den Daten, die aus der Übersetzung der Nachricht resultieren, werden dem Empfänger der Nachricht weitergehende Informationen zur Nachricht durch den Einsatz beispielsweise assoziativer Wissensmanagementsysteme unter Nutzung einer großen Zahl von vorhandenen und über Klassifizierungs- und Wissensmanagement gewonnener Daten und deren Verknüpfungen in Integrated Messaging Systemen bereitgestellt. Unter Wissensmanagementsystemen können beispielsweise Suchmaschinen, sowie assoziative Wissensmanagementsysteme verstanden werden.

Im Datensatz des Mailboxinhabers ist neben dem Profil des Absenders, wie z.B. Name, Vorname, Absenderkennung (z.B. CLI, persönliche ID, ...), Email-Adresse, Länderkennung, Geschlecht, verschiedene Rufnummern, Rollenzuordnung für bestimmte Rufnummer (z.B. consumer, business) weiterhin vermerkt, welche Quellsprachen von einer Übersetzung ausgeschlossen werden können. Stimmen Quell- und Zielsprache überein oder ist eine bestimmte Quellsprache im Datensatz des Mailboxinhabers von der Übersetzung ausgeschlossen worden, so wird die Inanspruchnahme des betreffenden Übersetzungsmoduls des Übersetzungssystems 190 nach Auswertung der wahrscheinlichsten Quellsprache und der Inhaberdaten des Datensatzes des Mailboxinhabers ausgeschlossen. Handelt es sich bei der Ursprungsnachricht um eine Voice-Mmail, so wird der über das ASR -Modul 70 ermittelte Textkörper der E-Mail im Speicherbereich für eingehende Sprachnachrichten und ergänzende Nachrichten 50 und/oder in eine ergänzende Nachricht als Text in der Originalsprache und wenn vorhanden, als in die Zielsprache übersetzter Sprachtext 50a, ebenfalls in den Textkörper als Zusatzdatensatz in den Speicherbereich für Zusatzinformationen einzelner Nachrichten 52 eingetragen. War die Ursprungsnachricht eine Textnachricht, ggf. mit unbestimmtem Anhang, so wird diese, wenn vorhanden, durch den in die Zielsprache übersetzten Ergänzungstext 40a ergänzt bzw. der Text in der Zielsprache wird in den Zusatzdatensatz aufgenommen. Die einzelnen Textteile in unterschiedlichen Sprachen werden um jeweils eine Zusatzinformation ergänzt, welche die gewählte Sprache kennzeichnet. Dies ermöglicht bei einer späteren multilingualen Wiedergabe der Texte dieser Nachricht über Sprachsynthese das für die jeweilige Sprache richtige Aussprachewörterbuch auszuwählen.

Die in Texte umgewandelten Nachrichten können generell oder nach erfolgreicher Suche von im Inhaberdatenbereich für erfasste und/oder ermittelte Inhaberdaten 170 abgespeicherten Schlüsselwörtern an die im Inhaberdatenbereich für erfasste und/oder ermittelte Inhaberdaten 170 entsprechend gekennzeichneten Zielrufnummern z.B. als SMS, MMS zur versendet werden. Diese Suche nach bestimmten Eigenschaften kann zur Filterung von unerwünschten Sprachnachrichten (Voice-Spam) genutzt werden.

Aus den Ergebnissen können entsprechende interne Löschparameter und - Parameterverknüpfungen generiert werden, die eine weitere Analyse der Inhalte überflüssig machen. Stellt der Betreiber des Integrated Messaging Systems eine derartige Parameter- und/oder Parameterverknüpfungsgenerierung bei einer Vielzahl seiner Mailboxinhaber fest, so kann er hieraus allgemeingültige Parameter und/oder Parameterverknüpfungen im Datenspeicher mit Beispieldaten 260 generieren lassen. Der Datenspeicher mit Beispieldaten 260 enthält Beispieldaten und /oder dynamische und/oder statische Parameter oder Parameterverknüpfungen.

Das in Fig. 1 aufgeführte System wird erfindungsgemäß auch zum Erfassen wahrscheinlicher emotionaler Zustände und/oder wahrscheinlicher Altersgruppen und/oder Geschlecht des Absenders einer Nachricht genutzt. Die entsprechenden Systemerweiterungen umfassen neben den bereits beschriebenen Modulen weiterhin

mindestens ein Modul zur Sprecherklassifikation 200 und/oder

mindestens ein Modul zur Analyse der Sprecheremotionen 210 durch Prosodieauswertung und/oder

mindestens ein Modul zur Analyse der Absenderemotionen 220 durch semantische Analyse der Nachrichteninhalte und/oder Analyse der Bildnachricht,

mindestens ein Datenspeicher für Informationen über die Sprachen, welche durch die vorhandenen Emotionsanalysemodule und/oder das und/oder die Übersetzungsmodule bearbeitet werden können 250 und/oder

mindestens ein Datenspeicher mit Beispieldaten 260.

Für die Ermittlung des wahrscheinlichsten emotionalen Zustands des Absenders von Sprachnachrichten, über eine Modul zur Ermittlung des wahrscheinlichsten emotionalen Zustandes 230, werden sowohl prosodische Informationen, die aus Sprachnachrichten resultieren, als auch Ergebnisse der semantischen Analyse vorhandener Texte und/oder weitere den Absender betreffende Medientypen, wie beispielsweise Bild- und Videoinformationen, ausgewertet. Die Bestimmung des Geschlechtes und/oder des Alters des Absenders der Nachricht wird über mindestens ein Modul zur Sprecherklassifizierung 200 vorgenommen. Als weitere Grundlage eines sich im Laufe der Nutzungszeit verfeinernden Systems zur Ermittlung des wahrscheinlichsten emotionalen Zustandes eines Anrufers werden entsprechende, statistische Daten des Anrufers, die im Absenderdatenbereich für erfasste und/oder ermittelte Absenderdaten 60 gespeichert sind, ausgewertet. Dabei handelt es sich um Daten aus vergangenen Analysen, welche z.B. Wichtungen für einzelne Ergebnisse, ähnlich wie bei der Ermittlung der wahrscheinlichsten Sprache, beinhalten können. Neben statistisch dynamisch erfassten Daten (z.B. Inhaberverhalten bei bestimmten E-mail-Absendem) enthält der Absenderdatenbereich für erfasste und/oder ermittelte Absenderdaten 60 auch das Profil des Absenders, wie z.B. Name, Vorname, Absenderkennung (z.B. CLI, persönliche ID, ...), Eamil-Adresse, Länderkennung, Geschlecht, verschiedene Rufnummern, Rollenzuordnung für bestimmte Rufnummer (z.B. consumer, business). Ausgewählte Profildaten können auch, durch das System generiert werden und/oder mit Zusatzinformationen (z.B. Wahrscheinlichkeitswerten, Confidencen) versehen werden.

Hat der Mailboxinhaber beispielsweise keinen Eintrag für das Geschlecht eines Absenders vorgenommen, so kann dieser Wert auch nach Ermittlung der Daten aus dem Modul zur Sprecherklassifizierung 200 und /oder der Daten aus dem Modul zur Ermittlung des wahrscheinlichsten Geschlechts 280 unter Einbeziehung vergangener Ergebnisse aus dem Absenderdatenbereich für erfasste und/oder ermittelte Absenderdaten 60 einschließlich Zusatzinformation dynamisch wieder in den Absenderdatenbereich für erfasste und/oder ermittelte Absenderdaten 60 eingetragen werden. Ähnliches gilt für die Ermittlung der Altersgruppe und die Analyse von Emotionen über das Modul zur prosodischen Analyse der Sprecheremotionen 210 und das Modul zur semantischen Analyse der Absenderemotionen 220.

Da sowohl das Modul zur Analyse der Sprecheremotionen 210 und das Modul zur Analyse der Absenderemotionen 220 als auch das Modul zur Sprecherklassifikation 200 von der angewendeten Sprache abhängig sein können, wird die über das Entscheidungsmodul 180 ermittelte Quellsprache dazu genutzt, die für diese Sprache verfügbaren Datensätze der Module 200; 210 und 220 auszuwählen. Das Entscheidungsmodul 180 beinhaltet ggf. eine Quelltextweiterleitung zur Mailbox 30 für Sprachnachrichten und/ oder zur weiteren Auswertung. Wenn die Quellsprache gleich der Zielsprache ist, erfolgt keine Übersetzung. Ansonsten wird der Quelltext dem Übersetzungssystem 190 und die Information zur Quellsprache dem Schnittstellenmodul zur Auswahl der Quellsprache 150 zugeleitet.

Steht für die ausgewählte Quellsprache kein Analysemodul zur Verfügung, so wird im Übersetzungssystem 190 nach Übersetzungsmodulen gesucht, die als Ergebnis eine Sprache liefern, die zur semantischen textuellen Emotionsanalyse geeignet ist.

Der ermittelte wahrscheinliche emotionale Zustand des Nachrichtenabsenders wird gemeinsam mit den ggf. ermittelten Informationen zur Altersgruppe und/oder zu Geschlecht und/oder zu Zeitinformationen im Datensatz des Absenders zur weiteren statistischen Analyse erfasst. Allgemeingültige Parameter und/oder Parameterverknüpfungen zur Auswertung von Absenderinformationen werden sowohl durch den Systemadministrator statisch festgelegt, als auch durch Auswertung einer Vielzahl von Parametersätzen der Mailboxen anderer Mailboxinhaber 270 im Integrated Messaging System ermittelt. Der Zugriff zu den gewünschten Daten erfolgt vorzugsweise über das Internet/Intranet 21. Derartige Parameterverknüpfungen können z.B. bei der Bestimmung des Geschlechts aus Sprecherklassifikation und Vorname des Absenders (wenn vorhanden) angewendet werden Derartige Parameterverknüpfungen könnten z.B. lauten:

WENN Vorname="Andrea" UND Landesvorwahl ="+49" (Deutschland) UND (Sprecherklassifikation=männlich; Confidence<90%) DANN Geschlecht:="weiblich"; Oder

WENN Vorname="Andrea" UND Landesvorwahl ="+39" (Italien) UND (Sprecherklassifikation=männlich; Confidence>60%) DANN

Geschlecht:="männlich";

Oder

WENN Vorname="Andrea" UND Landesvorwahl="+39" UND (Sprecherklassifikation=männlich; Confidence=50%) DANN

Geschlecht:="unbestimmt";

Hierbei kann auch anstatt der Landesvorwahl eine andere Kennung eingesetzt werden. Ein allgemeingültiger Parameter ist somit für alle Mailboxen 30 gültig und wird auf Nachrichten eines bestimmten Inhabers angewendet. Die oben beschriebenen Parameter und/oder Parameterverknüpfungen, welche durch den Administrator des Systems oder den Mailboxinhaber fest eingetragen werden können, werden auch als statische Parameter bezeichnet. Dynamische Parameter werden durch das System selbst generiert. Eine derartige Parameterverknüpfungsgenerierung könnt z.B. folgendermaßen erfolgen:

Bei Feststellung einer größere Anzahl von Absendervornamen "Peta" mit Landesvorwahl +kk in mehr als N Mailboxen verschiedener Inhaber und einer Geschlechtserkennung aus der Sprecherklassifikation mit "männlich", Confidence>90% in mehr als M Fällen wird z.B. folgende dynamische Parameterverknüpfung gelöscht

WENN Vorname="Peta" UND Landesvorwahl="+kk" UND (Sprecherklassifikation=männlich; Confidence=50%) DANN Geschlecht:="weiblich"; und folgender neue Parameterverknüpfung generiert:

WENN Vorname="Peta" UND Landesvorwahl="+kk" UND (Sprecherklassifikation=männlich; Confidence>=50%) DANN Geschlecht:="männlich";

In den Beispielen wird davon ausgegangen, dass die allg. Wahrscheinlichkeit für die Zuweisung ein Geschlechts ungefähr 50% beträgt, d.h. WENN (Sprecherklassifikation=männlich; Confidence>=50%) DANN Geschlecht:="männlich"; und WENN (Sprecherklassifikation=männlich; Confidence<50%) DANN Geschlecht:="weiblich";

Die Confidencewerte können in verschiedenen Systemen unterschiedlich skaliert werden.

Neben allgemeinen Parametern, können auch mailboxinterne, statische und dynamische Parameter und deren Verknüpfungen definiert und/oder generiert werden. Diese Parameter werden nur an Hand mailboxinterner Daten generiert bzw. durch den Inhaber eingetragen und treffen nur auf die Nachrichten des Mailboxinhabers zu, wobei interne Parameterverknüpfungen externe, allgemeingültige Parameterverknüpfungen u.U. überschreiben können. Auch hier kann z.B. die Priorisierung von Nachrichten bestimmter Absender definiert werden: z.B:

WENN (Nachricht mit Absenderkennung X) UND (Anhören der Nachrichten mit Absenderkennung X mit Wahrscheinlichkeit 80% abgebrochen) DANN Setze Priorität(X):= Priorität(X)-1

WENN Priorität(X) <=0 DANN (Überspringe Abspielen der Nachricht) usw.

Kürzer zurückliegende Ereignisse können z.B. bei der Ermittlung der Abbruchwahrscheinlichkeit höher gewichtet werden, so dass eine schnelle Anpassung der Parameterverknüpfungen an aktuelle Erfordernisse erfolgen kann.

Wie schon beschrieben, existieren dynamische und statische Parameter. Daneben werden bei Initialisierung des System im ersten Schritt Default-Parameter eingestellt. Diese können durch dynamische, systemgenerierte Parameter überschrieben werden. Diese wiederum können durch statische Parameter überschrieben werden, welche sich aus festen Eingaben des Mailboxinhabers oder des Systemadministrators ergeben.

Da sowohl für die Spracherkennung als auch für die Übersetzung eine allgemeine Analyse der semantischen Informationen erforderlich ist, können diese Vorgänge in einem Gesamtmodul, bestehend aus dem ASR-Modul 70 und dem Modul zur Analyse der Absenderemotionen 220 oder auch in getrennten Modulen unterschiedlicher Hersteller, bearbeitet werden.

Der als Datenbank ausgebildete Absenderdatenbereich für erfasste und/oder ermittelte Absenderdaten 60 dient als Grundlage eines selbst lernenden Systems zur Vervollkommnung der Ermittlung der Quellsprache, des Absendergeschlechts, -der Altersgruppe und des wahrscheinlichen emotionalen Zustandes eines Absenders von Nachrichten mit Hilfe von intern und extern modifizierbaren Parameterverknüpfungen.

Der wahrscheinliche emotionale Zustand kann auch zur Priorisierung von Nachrichten genutzt werden. Hierbei können zusätzlich aus häufigen emotionalen Zuständen einzelner Absender individuell Wichtungsfaktoren einzelner emotionaler Zustände abgeleitet werden, die Einfluss auf Parameterverknüpfungen haben, die im Datenspeicher mit Beispieldaten 260 und dem Modul zur Ermittlung des wahrscheinlichsten Geschlechts 280 gespeichert sind, welche bei der Ermittlung des wahrscheinlichsten emotionalen Zustandes ausgewertet werden.

Ermittelte Absenderdaten können zur Parametersteuerung, beispielsweise zur Auswahl der Stimme, bei der synthetischen Wiedergabe von Textnachrichten (Sprachsynthese, Text-To-Speech) genutzt werden.

Da die aus einzelnen Nachrichten ermittelten Absenderdaten nicht vollständig sein müssen, kann das System eine Schnittstelle erhalten, die die Möglichkeit bietet, z.B. in unternehmensinternen Adressdatenbanken, nach weiteren, noch nicht berücksichtigten Daten zu suchen. Die vorhandenen Daten dienen dabei als Suchparameter. Weiterhin muss das System fehlerrobust und fehlertolerant sein.

So kann es sich z.B. ergeben, dass der gleiche Absender im System mehrmals administriert wird, wenn er z.B. nur eine Voicemail und nur eine E-mail ohne Hinterlassen der Rufnummer angegeben hat. In dem Moment, wenn z.B. ein Mailboxinhaber über ein Administrationsinterface eine Beziehung zwischen beiden Absenderdaten herstellt, indem er bei vorhandener CLI die Email-Adresse ergänzt, und /oder das System in einem Fall durch automatische Auswertung der Nachrichteninhalte den entsprechenden Parameter ergänzt, können alle Nachrichten dieses Absenders, welche die CLI oder die Emailadresse des Absenders enthalten einem Absenderdatensatz zugeordnet werden. Dies kann sowohl für eine einzelne Mailbox als auch für alle Absendedatensätze des Absenderdatenbereiches für erfasste und/oder ermittelte Absenderdaten (60) der Mailboxen des Systems geschehen.

Weiterhin werden, bereits erfasste oder generierte Zusatzdaten vorteilhaft gemäß ihrem Inhalt klassifiziert. Die Klassifizierung erfolgt dabei entweder nach Vorgaben des Mailboxinhabers und/oder nach Vorgaben des Systembetreibers. Dabei werden die generierten Zusatzdaten vorzugsweise zu Nachrichtengruppen (Clustern) zusammengefasst, welche gemeinsam bearbeitet werden können. Nachrichtengruppen können beispielsweise nach Absendedatum, Absenderkennung (z.B. CLI, Absender-ID) entsprechend der vorgegebenen Prioritäten zusammengefasst werden.

Eine weitere Möglichkeit der Gruppierung/Klassifizierung/Clusterung besteht in der Analyse der Inhaltstypen verschiedener Nachrichten und oder Nachrichtensegmente. Bekannt sind Verfahren zur automatischen (textuellen) Annotation von Bild-, Video-, Ton- u.a. Aufzeichnungen bzw. zur Umwandlung von ergänzenden Sensormesswerten in entsprechende Text- Informationen, welche gemeinsam die Inhalte der Nachrichten wiederspiegeln. Die, sich aus Nachrichten mit verschiedenen Inhaltstypen ergebenden Daten können semantisch analysiert, nach vorgegebenen Klassifizierungsregeln bearbeitet und über eine Verknüpfungsmatrix 390, die als Zuordnungsmatrix (n:m) für verschiedenen Klassen/Kategorien ausgebildet ist, zugeordnet werden.

Dadurch ist es möglich, dass eine Nachricht auch mehreren Klassen/Kategorien zugeordnet werden kann. Beispielsweise könnte eine Bild-Nachricht sowohl der Klasse/Kategorie "Porträt" (anhand des Inhaltes), als auch der Klasse/Kategorie "Urlaub" (anhand eines im Urlaub liegenden Datums), zugeordnet werden. Die Verknüpfungen werden dann als Ergebnis in einer Indexdatenbank 300, die als Speicherbauelement mit Indizes der Nachrichten verschiedener Klassen/Kategorien ausgebildet ist und/oder in einem Speicherbereich für Zusatzinformationen einzelner Nachrichten 52 gespeichert. Der Speicherbereich für Zusatzinformationen einzelner Nachrichten 52 kann beispielsweise die CLI und/oder die Nutzerkennung und/oder die ermittelte Altersgruppe und/oder das Geschlecht und/oder die ermittelten Emotionen und/oder die erfassten und/oder ermittelten Zusatzinformationen, ermittelte Kennungen, Gallileo-Daten, Temperaturdaten, Daten zur Luftfeuchtigkeit, zur Helligkeit und weitere ähnliche Daten enthalten.

In einer weiteren Ausführungsform kann die Zuordnung einer Nachricht zu einer Klasse mit Wichtungskoeffizienten bzw. Confidenzwerten versehen werden, welche die Zuverlässigkeit der Zuordnung zu einer bestimmten Klasse bewerten.

Durch die große Zahl vorhandener, über Klassifizierungs- und Wissensmanagement gewonnener Daten, und deren Verknüpfungen in Integrated Messaging Systemen und/oder von zusätzlichen Verknüpfungen, deren Daten aus externen Quellen resultieren, die über das Internet/Intranet (21) erschlossen wurden, ergeben sich neue Möglichkeiten zur Adaption und Optimierung eingesetzter Technologien (siehe Fig. 1).

Weiterhin können Ergebnisse der Spracherkennung klassifiziert und anhand eines Moduls zur Klassifizierung und/oder zum Vergleich mit vorhandenen Daten ähnlicher Klassen 400 mit älteren Erkennungsergebnissen (Text einschließlich möglicher N-Best-Listen) der gleichen Nachrichtenklasse verglichen werden . Durch diese Verfahrensweise können beispielsweise Wortfolgen ermittelt werden, die einen ähnlichen Sachverhalt beschreiben. Durch eine zusätzliche Anwendung von Technologien des assoziativen Wissensmanagements, die über ein Modul für assoziatives Wissensmanagement 410 implementiert werden, können beispielsweise auch neue Wörter/Wortkombinationen und/oder Phonemfolgen gefunden werden, die bei einem Vorkommen im Zusammenhang mit bestimmten Nachrichtenklassen mit diesen Klassen verknüpft werden können, und danach für weitere Optimierungen der Erkennungsergebnisse innerhalb dieser Nachrichtenklassen zu Verfügung stehen. Diese dem System bis dahin unbekannten Wörter/Wortkombinationen und/oder Phonemfolgen können damit als Schlüssel für weitere Verknüpfungen dienen.

Wie bereits beschrieben, könnte eine Bild-Nachricht sowohl der Klasse/Kategorie "Porträt" als auch der Klasse/Kategorie "Urlaub" zugeordnet werden. Die Verknüpfungen werden dann als Ergebnis in einer Indexdatenbank 300, die dem Mailboxsystembetreiber zugeordnet ist, und/oder in den Speicherbereich für Zusatzinformationen einzelner Nachrichten 52 des Mailboxinhabers gespeichert. Zur Unterstützung der zusätzlichen Anwendung des assoziativen Wissensmanagements können mit dem Ziel der Vereinfachung der Suche nach Nachrichten bestimmter Kategorien die Absenderinformationen (Nutzerkennungen, wie z.B. Absender-ID, CLI, HLR, Email-Adr...) um Zusatzinformationen (wie z.B. Zeitstempel, Länge, ...) und Verweise (Links) erweitert werden, die auf die einzelnen Nachrichtenklassen (mit entsprechend ähnlichen Annotationsinhalten) zugeordneten Indizes verweisen, denen auch die entsprechende Nachricht zugeordnet wurde. Sind beispielsweise schon mehrere Nachrichten der Klasse "Urlaub2004" für einen Absender zugeordnet worden, so können über die Auswertung der Zeitinformationen und/oder CLI auch andere Nachrichten, deren Inhalt vorerst nicht auf diese Klasse schließen lässt (z.B. ein Porträt) der Klasse "Urlaub2004" zugeordnet werden.

Es ist weiterhin möglich, bestimmte undefinierbare Wörter/Wortkombinationen und/oder Phonemfolgen durch Wörter/Wortkombinationen aus ähnlichen Äußerungen innerhalb der gleichen Nachrichtenklasse und ggf. des gleichen Sprechers zu ersetzen. Ein ähnliches Verfahren zur Optimierung von Übersetzungsergebnissen kann unter Auswertung von alten Daten der Übersetzungsergebnisse einer Nachrichtenklasse, die z.B. Paare von Wortkombinationen/Wortfolgen in verschiedenen Sprachen enthalten, angewendet werden.

Das gesamte Messaging System und/oder Informationen aus dem Kommunikationsnetz 20 bzw. aus dem Internet/Intranet 21 und verbundenen Datenbanken, dienen damit als Hintergrundwissen (Weltwissen) zur Verbesserung der Eigenschaften einzelner Komponenten, wie beispielsweise der des ASR-Moduls 70 mit Algorithmen zur Spracherkennung, des Übersetzungssystem 190 und des Moduls zur Analyse der Absenderemotionen 220.

Weiterhin bietet es sich an, auch Daten zur Ortsbestimmung z.B. über GPS, Gallileo, wie auch Daten zur Temperatur, Feuchtigkeit und Helligkeit zur Klassifizierung von Nachrichten zu nutzen., (siehe auch Fig. 2). Einzelne dieser Medientypen können auch als Zusatzinformationen innerhalb des Systems generiert werden. Beispielsweise kann die Helligkeit anhand des Farbspektrum beigefügter aktueller Bildinformationen bestimmt werden. Systeme mit Erfassung verschiedener Sensordaten und deren Übermittlung über ein Telekommunikationsnetz sind hinlänglich bekannt. Werden diese Daten nun gemeinsam mit hinterlassenen Nachrichten übermittelt und in einen Speicherbereich für Zusatzinformationen einzelner Nachrichten 52 übernommen, so ergeben sich daraus sowohl neue Klassifizierungsmöglichkeiten innerhalb des Messaging Systems als auch feinere Suchkriterien innerhalb einzelner Nachrichtenklassen.

Die Fülle der Nachrichten und deren Inhalte im Messaging System kann der Betreiber somit dazu nutzen, um als Vermittler von Kontakten zur Erlangung von Inhalten aufzutreten. Sucht ein Mailboxinhaber z.B. "Abendbilder aus Neapel", so können diese Angaben sowohl dazu genutzt werden, um eine neue Klasse zu beschreiben als auch bei vorhandenen Verknüpfungen mit den Klassen "Bilder", "Neapel" nach Bildnachrichten zu suchen, welche ein entsprechendes Farbspektrum aufweisen und zu bestimmten Uhrzeiten versendet wurden. In die Klasse "Neapel" könnten z.B. auch alle Nachrichten aufgenommen werden, welche entsprechende GPS-Daten aufweisen. Die Urheber dieser Nachrichten können dann mit deren Einverständnis dem suchenden Mailboxinhaber mitgeteilt werden.

Die vorhandenen Klassifizierungsregeln können auch dazu dienen, ungewollte Nachrichten (z.B. Spam) auszufiltern. Dies betrifft aufgrund der in der Erfindung vorgestellten Strukturen nicht nur reine Textnachrichten, sondern weiterhin die in Fig.2 aufgezeigten Nachrichtentypen.

Ebenso wie im Inhaberdatenbereich für erfasste und/oder ermittelte Inhaberdaten 170, im Speicher für statische und dynamische Parameterverknüpfungen zur Auswertung von Absender- und Inhaberinformationen 290 und im Datenspeicher mit Beispieldaten 260 enthaltenen Parameter und Parameterverknüpfungen kann als Klassifizierungsergebnis eine Priorität oder ein Score einer Nachricht und/oder deren Segmente errechnet werden, welche/welcher zu Reihung oder akustischen und/oder visuellen Markierung der Nachrichtendokumente und/oder deren Segmente genutzt werden kann. Eine akustische Markierung kann z.B.

a) durch Änderung der Stimme, der Lautstärke und/oder der Prosodie bei der Wiedergabe von Texten über Text-To-Speech-Systeme,
b) durch Weglassen von nichtmarkierten Segmenten oder Segmenten unter oder über einer im Speicher für statische und dynamische Parameterverknüpfungen zur Auswertung von Absender- und Inhaberinformationen 290 oder im Datenspeicher mit Beispieldaten 260 festgelegten Grenzpriorität bei der Wiedergabe von Textsegmenten über Text-To-Speech-Systeme und/oder Sprachsegmenten,
c) durch Signaltöne oder
d) durch eine Kombination der genannten Verfahren

erfolgen.

Die gezeigte Struktur zur Analyse der Nachrichteninhalte wird dazu genutzt, ggf. nach mailboxspezifisch vorgegebenen Parameterverknüpfungen, automatisch Antworten auf eine Nachricht zu generieren. Ist der Mailboxinhaber z.B. eine öffentliche Institution, so können bei Auswertung entsprechender Inhalte auch vorgefertigte Dokumentvorlagen zum Ausfüllen an den jeweiligen Absender gesendet werden, bzw. nach dem Hinterlassen einer Voice-Mail des Anrufers auf ein Sprachportal weitergeleitet werden, welches dem Anrufer verschiedene Optionen (u.a. Versand von Standardformularen) bietet. Ist eine derartige Antwort durch das System generiert worden, so wird die hinterlassene Nachricht durch die Meldung darüber ergänzt, so dass der Mailboxinhaber über den automatischen Versand der Antwort in Kenntnis gesetzt wird. Dies kann über eine Sprachaufzeichnung und/oder durch eine Textnachricht und/oder über andere Medien erfolgen (SMS, MMS, Animation, Bild, Smiley, ...).

Das System weist einen zusätzlichen Anschluss zu einem Datennetz wie beispielsweise zum Internet/Intranet 21 auf. Dadurch kann auch eine semantische Analyse für die Auswertung externer Dokumente vorgenommen werden, welche zusätzliche Informationen zu den im System vorhandenen Daten, wie beispielsweise den Adressdaten, liefern.

Die im Datenspeicher mit Beispieldaten 260 gespeicherten Parameterverknüpfungen zur Auswertung der Absenderinformationen können um weitere Verknüpfungen erweitert werden, welche dazu dienen, zu bereits klassifizierten Inhalte automatisch Antworten zu generieren. Dies kann sowohl zeitversetzt durch Senden einer Antwortnachricht an den Absender, als auch in Echtzeit, direkt beim Hinterlassen einer Voicemail durch einen Sprachdialog, erfolgen. In diesem Fall wird die durch ein Messaging-System unterstützte asynchrone Kommunikation zwischen mindestens zwei Partnern in eine synchrone Kommunikation umgewandelt. Dazu können beispielsweise im Speicher für statische und dynamische Parameterverknüpfungen zur Auswertung von Absender- und Inhaberinformationen 290 für bestimmte empfangene Nachrichtenklassen und/oder deren Segmente Standardantworten oder Teile davon in beliebiger Formate abgespeichert sein. Automatisch durch das System generierte Antworten werden zur Information des Mailboxinhabers mit dem entsprechenden empfangenen Nachrichtendokument verknüpft bzw. an dieses angehangen. Auch kann z.B. über das Internet/Intranet 21 nach automatischer Auswertung des Inhaltes des Speichers für statische und dynamische Parameterverknüpfungen zur Auswertung von Absender- und Inhaberinformationen 290 mit einer automatisch generierten Bestellung für im Nachrichtendokument oder dessen Segmenten enthaltene Warenbezeichnungen reagiert werden.

Weitere automatisch generierte Reaktionen des Systems nach inhaltlicher Auswertung empfangener Nachrichtendokumente und/oder deren Segmente können sein:

a) Generierung und Versand mindestens eines Nachrichtendokumentes als Antwort
b) Generierung und Versand mindestens einer Datei
c) Aufbau mindestens einer Telefon-/Sprachverbindung zu mindestens einer im Absenderdatenbereich für erfasste und/oder ermittelte Absenderdaten 60 oder im Inhaberdatenbereich für erfasste und/oder ermittelte Inhaberdaten 170 oder im Speicher für statische und dynamische Parameterverknüpfungen zur Auswertung von Absender- und Inhaberinformationen 290 gespeicherten Verbindungskennung (z.B. Rufnummer, CLI, HLR, SIP-Adresse u.ä.)
d) Generierung und/oder Versand eines Signals
e) Kombinationen der unter a), b), c) oder d) genannten Reaktionen

Beispielsweise ist es auch möglich, dass das System bereits Vorschläge für Antworten generiert und dem Mailboxinhaber anbietet.

**Bezugszeichenaufstellung**

10      Absender (der Nachricht)
20      Kommunikationsnetz
21      Internet/Intranet
30      Mailbox)
35      Speicher für Originalnachricht und Ergänzung durch Zusatzinformationen (z.B. mit zusätzlichem, aktuellem Abbild des Absenders zum Zeitpunkt des Hinterlassens der Nachricht (z.B. als Anhang))
40      Speicherbereich für eingehende Text-Nachrichten und ergänzte Nachrichten
40a     Übersetzter Ergänzungstext
50a     Übersetzter Sprachtext
50      Speicherbereich für eingehende Sprachnachrichten und ergänzte Nachrichten
52      Speicherbereich für Zusatzinformationen einzelner Nachrichten
60      Absenderdatenbereich für erfasste und/oder ermittelte Absenderdaten
70      ASR-Modul

80    Modul zur Sprachenerkennung (Language Detection) (durch Anwendung von Methoden der Sprachsignalverarbeitung)
90    Modul zur Sprachenerkennung/Sprachendetektion anhand eines Textes
100   Sprachenbewertungsmodul (mit Algorithmus zur Auswahl der wahrscheinlichsten Sprache)
110   Eingangsmodul für Quellsprachen
120   Modul zur Auswahl der Zielsprachen
130   Übersetzungsmodul mit Entscheidungsmatrix
140   Ausgangsmodul für Zielsprachen
150   Schnittstellenmodul zur Auswahl der Quellsprache
160   Textnachrichtensystem (z.B. SMS, MMS, Instant Messaging)
170   Inhaberdatenbereich für erfasste und/oder ermittelte Inhaberdaten
180   Entscheidungsmodul
190   Übersetzungssystem
200   Modul zur Sprecherklassifizierung
210   Modul zur Analyse der Sprecheremotionen
220   Modul zur Analyse der Absenderemotionen
230   Modul zur Ermittlung des wahrscheinlichsten emotionalen Zustandes
240   Modul zur Ergänzung der Nachrichten um Zusatzinformationen
250   Datenspeicher mit Informationen über die Sprachen, welche durch die vorhandenen Emotionsanalysemodule
      und/oder das und/oder die Übersetzungsmodule bearbeitet werden können
260   Datenspeicher mit Beispieldaten
270   Mailboxen anderer Mailboxinhaber
280   Modul zur Ermittlung des wahrscheinlichsten Geschlechts
290   Speicher für statische und dynamische Parameterverknüpfungen zur Auswertung von Absender- und Inhaberinformationen
300   Indexdatenbank
310   Textnachricht
320   Bild und/oder Videonachricht
330   Audionachricht (z.B. Voicemail)
340   Nachrichten mit anderen Medientypen
350   Modul zur Annotation und/oder Transkription von Bildnachrichten
360   Modul zur Annotation und/oder Transkription von Audio- und/oder Sprachnachrichten
370   Modul zur Annotation und/oder Transkription von Nachrichten anderer Medientypen
380   Nachrichtenklassifizierungsmodul
390   Verknüpfungsmatrix (Zuordnungsmatrix (**n:m**) für verschiedene Klassen/Kategorien)
400   Modul zur Klassifizierung und/oder zum Vergleich mit vorhandenen Daten ähnlicher Klassen
410   Modul für (assoziatives) Wissensmanagement
420   Ergebnis des (assoziativen) Wissensmanagements
500   Klassifizierungsblock

**Patentansprüche**

1.  Verfahren zur Bearbeitung von Nachrichten im Rahmen eines Integrated Messaging Systems **dadurch gekennzeichnet,** das **nach Ermittlung der Kennung** die der aktuellen Nachricht eines Absenders entnehmbaren Textdaten und Sprachdaten von einem Übersetzungssystem (190) bearbeitet und nach der Bearbeitung zusammen mit

    - Tondaten, Bilddaten, Nachrichten mit anderen Medientypen.(340) zu der aktuellen Nachricht und Daten, die
    aus zusätzlichen Informationsquellen stammen,
    - Daten, die im Rahmen vorhergehender Nachrichten des Absenders in einem Absenderdatenbereich für erfasste und/oder ermittelte Absenderdaten (60) gespeichert wurden und
    - Daten von zusätzlichen Merkmalen aus dem Inhaberdatenbereich für erfasste und/oder ermittelte Inhaberdaten
    (170),

    nach semantischen, prosodischen, phonetischen und anderen analytischen Methoden, sowie Bildverarbeitungsmethoden auf das Vorliegen von Informationen/Daten ausgewertet werden, die geeignet sind, dem Empfänger
    sowohl die Nachricht selber, als auch die mit der betreffenden Nachricht verbundenen Hintergrundinformationen in
    möglichst authentischer Form zu übermitteln, wobei sowohl die aktuelle Nachricht, als auch die aus der Nachricht abgeleiteten Daten entsprechend vorgegebener Klassifizierungsregeln bewertet und unterschiedlichen Klassen einer als Zuordnungsmatrix (n:m) ausgebildeten Verknüpfungsmatrix (390) zugeordnet werden, und dass die im Rahmen der Verknüpfungsmatrix (390) bereitgestellten Daten in einer Indexdatenbank (300) und/oder in einem Speicherbereich für Zusatzinformationen einzelner Nachrichten (52) gespeichert werden.

2. Verfahren nach Anspruch 1, **dadurch gekennzeichnet, dass** zur Übersetzung der aktuellen Nachricht die Sprache der Nachricht und/oder eines Segments der Nachricht nach der Beziehung

$$L = \mathrm{argmax}\ (W_{CLI}(Lx)\ +\ W_{LD} * C_{LD}(L_x)\ +\ W_T * C_T(L_x)\ +\ W_H * N_H(L_x) + \ldots +$$
$$W_n * C_n(L_x)),$$

ermittelt wird, wobei die Beziehung nacheinander für jede im System unterstützte Quellsprache durchgeführt wird, und dass im Ergebnis die Sprache ($L_x$) als Quellsprache (L) gilt, für die L den Maximalwert aufweist, wobei bei gleich hohen oder nahe beieinander liegenden Maximalwerten für mindestens zwei Sprachen automatisch eine Information zur Korrektur der Wichtungsfaktoren ausgegeben wird.

3. Verfahren nach Anspruch 1, **dadurch gekennzeichnet, dass** das der Datensatz, der das Ergebnis der Sprachendetection der Quellsprache enthält, sowohl für den weiteren Abgleich in Bezug auf die automatische Auswahl der Quellsprache für das Übersetzungssystem (190) als auch für die automatischen Auswahl der Zielsprache in welche die Sprach- und/oder Textnachricht übersetzt werden soll, ausgewertet wird.

4. Verfahren nach Anspruch 1, **dadurch gekennzeichnet, dass** die Ansteuerung der einzelnen Übersetzungsmodule des Übersetzungsmoduls mit Entscheidungsmatrix (130) über die Entscheidungsmatrix erfolgt, in welche sowohl das Ergebnis der Detektion der Quellsprache, als auch die ermittelte Zielsprache automatisch eingegeben werden.

5. Verfahren nach Anspruch 1, **dadurch gekennzeichnet, dass** zusätzlich zu den Daten, die aus der Übersetzung der Nachricht resultieren, für den Empfänger der Nachricht weitere Informationen bereitgestellt werden, die durch den Einsatz von Prinzipien des assoziativen Wissensmanagements ermittelt werden.

6. Verfahren nach Anspruch 1, **dadurch gekennzeichnet, dass** im Datensatz des Mailboxinhabers neben den Daten zum Profil des Absenders, die Kennung, wie Name, Vorname, Absenderkennung E-Mail-Adresse, Länderkennung, Geschlecht, verschiedenen Rufnummern und Rollenzuordnung für definierte Rufnummern auch Daten über Quellsprachen gespeichert sind, die von einer Übersetzung ausgeschlossen werden.

7. Verfahren nach Anspruch 1, **dadurch gekennzeichnet, dass** zur Ermittlung des emotionalen Zustands des Absenders einer Nachricht sowohl Ergebnisse der prosodischen Analysen von Sprachnachrichten, als auch Ergebnisse der semantischen Analyse von beigefügten Textdateien, sowie vorhandene Bild- **und/oder** Videoinformationen ausgewertet werden.

8. Verfahren nach Anspruch 1, **dadurch gekennzeichnet, dass** die Bestimmung des Geschlechts und/oder des Alters des Absenders der Nachricht anhand von Daten aus mindestens einem Modul zur Sprecherklassifizierung (200) und/oder anhand von Daten aus einem Modul zur Ermittlung des wahrscheinlichsten Geschlechts (280) unter Einbeziehung von Daten aus bereits vorhergehenden Nachrichten aus dem Absenderdatenbereich für erfasste und/oder ermittelte Absenderdaten (60) einschließlich Zusatzinformationen vorgenommen wird.

9. Verfahren nach Anspruch 1, **dadurch gekennzeichnet, dass** aktuelle Daten zum wahrscheinlichen emotionalen Zustand des Absenders der Nachricht gemeinsam mit den Daten zu Alter und Geschlecht des Absenders der Nachricht zur weiteren statistischen Analyse verwendet werden, dass diese Daten zusammen mit weiteren Daten, die durch Auswertung der Absenderinformationen ermittelt wurden, im Rahmen von Parameter und/oder Parameterverknüpfungen zu Datensätzen zusammengefasst werden, wobei eine Aufteilung in statische und/oder dynamische Parameter und/oder Parameterverknüpfungen erfolgt.

10. Verfahren nach Anspruch 1, **dadurch gekennzeichnet**, das die Daten zum wahrscheinlichsten emotionalen Zustand des Absenders der Nachricht zur Einstufung der Nachrichten in eine Prioritätenliste zu den eingehenden Nachrichten verwendet wird.

**11.** Verfahren nach Anspruch 1, **dadurch gekennzeichnet, dass** die eingehenden Nachrichten verschiedenen Nachrichtentypen zugeordnet werden, wobei die sich aus den verschiedenen Nachrichtentypen ergebenden Daten nach vorgegebenen Klassifizierungsregeln bearbeitet und über eine Verknüpfungsmatrix (390) unterschiedlichen Klassen/Kategorien zugeordnet werden, und dass die Daten nach der Zuordnung zu den betreffenden Klassen und/oder Kategorien einer Indexdatenbank (300) des Mailboxsystembetreibers zugeordnet und/oder in entsprechenden Klassen in den Speicherbereich für Zusatzinformationen einzelner Nachrichten (52) der Mailbox ( 30) des betreffenden Mailboxinhabers gespeichert werden.

**12.** Verfahren nach Anspruch **dadurch gekennzeichnet, dass** die in der Indexdatenbank (300) des Mailboxsystembetreibers und/oder die im Speicherbereich für Zusatzinformationen einzelner Informationen (52) gespeicherten, nach Klassen/Kategorien geordneten Daten innerhalb der Klassen/Kategorien mit Koeffizienten versehen sind, welche die Zuverlässigkeit der Zuordnung zu einer bestimmten Klasse bestimmen.

**13.** Anordnung zur Bearbeitung von Nachrichten im Rahmen eines Integrated Messaging Systems, **bestehend aus**

- mindestens einem Übersetzungssystem (190) mit automatischer Fremdsprachendetektion,
- mindestens einem Modul zur prosodischen Analyse der Sprecheremotionen (210),
- mindestens einem Modul zur semantischen Analyse der Absenderemotionen (220),
- mindestens einem Datenspeicher mit Informationen über die Sprachen, welche durch die vorhandenen Emotionsanalysemodule und/oder das und/oder die Übersetzungsmodul/e bearbeitet werden können (250),
- mindestens einem Datenspeicher mit Beispieldaten (260) und/oder dynamischen/statischen Parametern und oder Parameterverknüpfungen zur Auswertung gesammelter Absenderinformationen,
- mindestens einem Absenderdatenbereich für erfasste und/oder ermittelte Absenderdaten (60), dem die über die o.g. Module ermittelten Daten zugeführt werden, und
- mindestens Klassifizierungsblock (500).

**14.** Anordnung nach Anspruch 13, **dadurch gekennzeichnet, dass** das Übersetzungssystem (190)

- aus einem Modul zu Sprachenerkennung/Sprachendetektion anhand eines Textes (90) mit Zugriff auf ein ASR-Modul (70) mit Algorithmen zur Spracherkennung,
- einem mit dem Modul zu Sprachenerkennung/Sprachendetektion anhand eines Textes (90) verbundenen Sprachenbewertungsmodul (100) mit Zugriff auf einen Speicherbereich für Zusatzinformationen einzelner Nachrichten (52), auf ein Modul zur Sprachenerkennung (80) und auf ein Modul zur Ermittlung des wahrscheinlichsten Geschlechts (280),
- einem mit dem Modul zu Sprachenerkennung/Sprachendetektion anhand eines Textes (90) verbundenen Entscheidungsmodul (180) mit Ausgängen zum Eingangsmodul für Quellsprachen (110), zu einem Schnittstellenmodul zur Auswahl der Quellsprache (150) und zu einem Modul zur Ergänzung der Nachrichten um Zusatzinformationen (240), wobei das Entscheidungsmodul (180) Zugriff auf das ASR-Modul (70) hat, und aus
- einem Übersetzungsmodul mit Entscheidungsmatrix (130), das mit dem Eingangsmodul für Quellsprachen (110) mit den Quellsprachen (S1-Sn), dem Ausgangsmodul für Zielsprachen (140) mit den Zielsprachen (S1-Sm), dem Schnittstellenmodul zur Auswahl der Quellsprache (150) und einem Modul zur Auswahl der Zielsprache (120) verknüpft ist, wobei das Modul zur Auswahl der Zielsprache (120) eine Querverbindung zum Inhaberdatenbereich für erfasste und/oder ermittelte Inhaberdaten (170) und das Ausgangsmodul für Zielsprachen (140) Querverbindungen zum Modul zur Ergänzung der Nachrichten um Zusatzinformationen (240), zu einem Modul zur Analyse der Absenderemotionen (220) und zu einem Klassifizierungsblock (500) aufweisen, besteht.

**15.** Anordnung nach Anspruch 13 und 14, **dadurch gekennzeichnet, dass** der Klassifizierungsblock (500), dem alle Daten einschließlich Zusatzinformationen einer Nachricht entsprechend dem Datentyp zugeführt werden,

- aus einem Nachrichtenklassifizierungsmodul 380, in dem die Nachrichten entsprechend ihrem Nachrichtentyp geordnet werden,
- einer mit dem Nachrichtenklassifizierungsmodul (380) verbundenen Verknüpfungsmatrix (390), die als Zuordnungsmatrix (n:m) für verschiedenen Klassen/Kategorien ausgebildet ist, und
- einer mit der Verknüpfungsmatrix (390) verbundenen Indexdatenbank (300) besteht, wobei das Nachrichtenklassifizierungsmodul (380) eine Querverbindung zum Speicher für statische und dynamische Parameterverknüpfungen zur Auswertung von Absender- und Inhaberinformationen (290), zum Datenspeicher mit Beispieldaten 260 und zum Ausgangsmodul für Zielsprachen (140) aufweist, und dass die Verknüpfungsmatrix (390) und die Indexdatenbank (300) eine Querverbindung zur Mailbox (30) aufweisen.

Figur 1

Figur 2

**Europäisches Patentamt**  
**Nummer der Anmeldung**  
EP 05 01 2594

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 889 626 A (OCTEL COMMUNICATIONS CORPORATION) 7. Januar 1999 (1999-01-07) * Spalte 2, Zeile 12 - Spalte 3, Zeile 26 * ----- | | H04M3/53 H04M3/42 |
| A | US 2002/002460 A1 (PERTRUSHIN VALERY ET AL) 3. Januar 2002 (2002-01-03) * Zusammenfassung * ----- | | |

**RECHERCHIERTE SACHGEBIETE (IPC)**

H04M

Der vorliegende Recherchenbericht wurde für alle Patentansprüche erstellt

| Recherchenort | Abschlußdatum der Recherche | Prüfer |
|---|---|---|
| Den Haag | 17. Januar 2006 | Vandevenne, M |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 01 2594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2006

| Im Recherchenbericht angeführtes Patentdokument | Datum der Veröffentlichung | Mitglied(er) der Patentfamilie | Datum der Veröffentlichung |
|---|---|---|---|
| EP 0889626 A | 07-01-1999 | KEINE | |
| US 2002002460 A1 | 03-01-2002 | KEINE | |

Für nähere Einzelheiten zu diesem Anhang : siehe Amtsblatt des Europäischen Patentamts, Nr.12/82

EPO FORM P0461